# EUROPEAN PATENT SPECIFICATION

(11) **EP 2 996 950 B1**
(45) Date of publication and mention of the grant of the patent: **26.07.2017**
(21) Application number: 14798364.7
(22) Date of filing: 12.05.2014
(51) Int. Cl.: B65D 19/06

(54) **SHIPPING CONTAINER WITH FORKSTRAP CONNECTOR**
TRANSPORTBEHÄLTER MIT PALETTENVERBINDUNGSELEMENT
CONTENEUR D'EXPÉDITION AVEC CONNECTEUR DE SEMELLE ASSOCIÉ

(30) Priority: 13.05.2013 US 201361822543 P
(43) Date of publication of application: 23.03.2016
(73) Proprietor: Macro Plastics, Inc., Fairfield, CA 94533 (US)
(72) Inventor: TURNER, Todd, T., Corydon, Indiana 47112 (US)
(74) Representative: HGF Limited
(86) International application number: PCT/US2014/037668
(87) International publication number: WO 2014/186273

(56) References cited:
- WO-A1-00/68100
- WO-A1-98/34840
- DE-A1- 2 057 361
- JP-A- H04 114 861
- US-A- 4 128 253
- US-A- 5 456 189
- US-A- 5 497 709
- US-A- 5 794 543
- US-A1- 2010 107 934

## Description

### BACKGROUND OF THE INVENTION

### 1. Field of the Invention

The present invention generally relates to returnable shipping containers, and more specifically to shipping containers having replaceable forkstraps or a replaceable forkstrap unit.

### 2. General Background of the Invention

For many years, industries dealing in bulk goods have utilized returnable containers. A common problem is that containers have to be scrapped at great cost due to damage to the forkstraps and many other containers must be scrapped because all or a portion of the connector used to join the forkstraps to the base unit is formed integrally with the base unit, rendering the base unit unusable if even a single connector is damaged.

Additional issues arise due to the fact that known integral connectors rely on interlocking connections that, as a practical matter, make them extremely difficult to remove. The reason for this is that a forkstrap must be retained with sufficient force that it will not inadvertently disconnect under normal use conditions. Thus, the forkstrap must be able to resist a separating force applied to even if more than one loaded container being carried on tips to one side, and such containers often carry 2000 pounds in bulk goods in addition to the weight of the container. Accordingly, as a practical matter, many users will scrap a container with a damaged forkstrap, even if the forkstrap is theoretically replaceable, because the force required to remove the forkstrap often damages the base unit or the integral connectors or both (or at least renders the integral connectors unreliable).

What is needed then is a reusable bulk container with removable forkstraps, wherein the connectors affixing the forkstrap to the base unit are not integral to the base unit or the forkstrap and wherein the forkstrap can be separated from the base unit without using undue force while the connector, while in use, will provide sufficient retention force to prevent inadvertent separating during use.

US 2010/107934 A1 discloses an intensive pallet comprising a plurality of first direction planks spaced from each other and a plurality of second direction planks spaced from each other.

DE 20 57 361 A1 discloses a pallet formed by elements of component strips or slats forming the plan or load surface.

JPH04 114861 A discloses a pallet made of synthetic resin comprising a reinforcing plate, a first rib is exerted on the upper surface of the plate toward the end of the side edge of a deck member and second ribs are extended parallel to the side edge of the deck member.

### SUMMARY OF THE INVENTION

The present invention relates to a reusable shipping container having a forkstrap unit (or separate forkstraps) that is removably connected to the base unit of the container, and more particularly to such a container that uses a connector to connect the forkstrap unit to the base unit that is not integral to the forkstrap unit or the base unit. In one aspect, there is provided a shipping container as defined in claim 1 of the appended claims.

### BRIEF DESCRIPTION OF THE DRAWINGS

For a further understanding of the nature, objects, and advantages of the present invention, reference should be made to the following detailed description, read in conjunction with the attached figures, wherein like reference numerals denote like elements.
Figure 1 is perspective of the base unit of a container showing a forkstrap unit affixed to the base unit using an embodiment of the forkstrap connector.

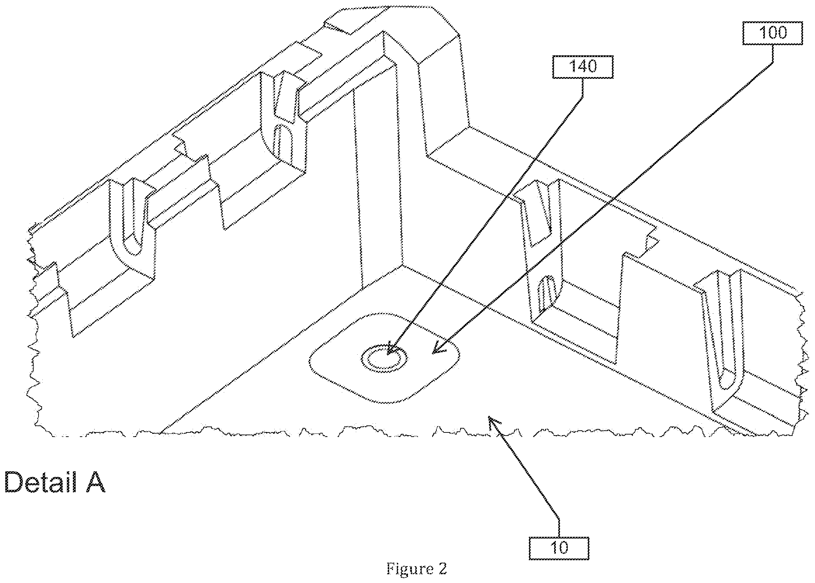

Figure 2 is a perspective view of Detail A with an embodiment of the forkstrap connector installed.

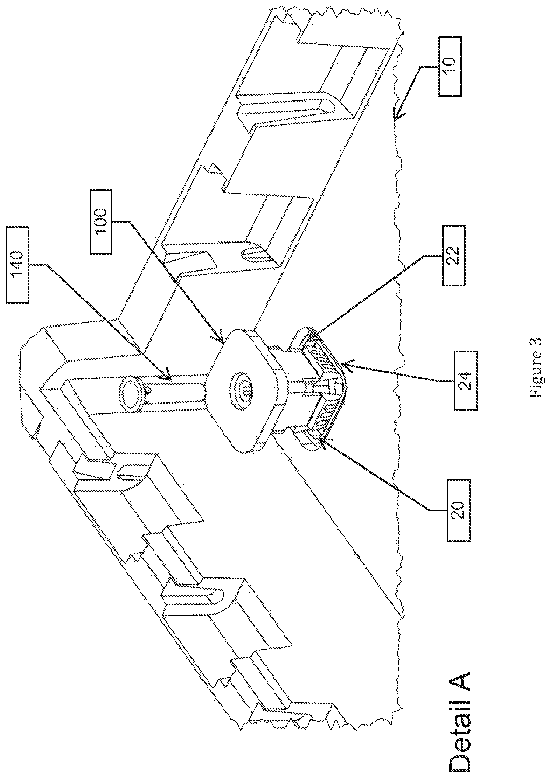

Figure 3 is an exploded perspective view of Detail A.

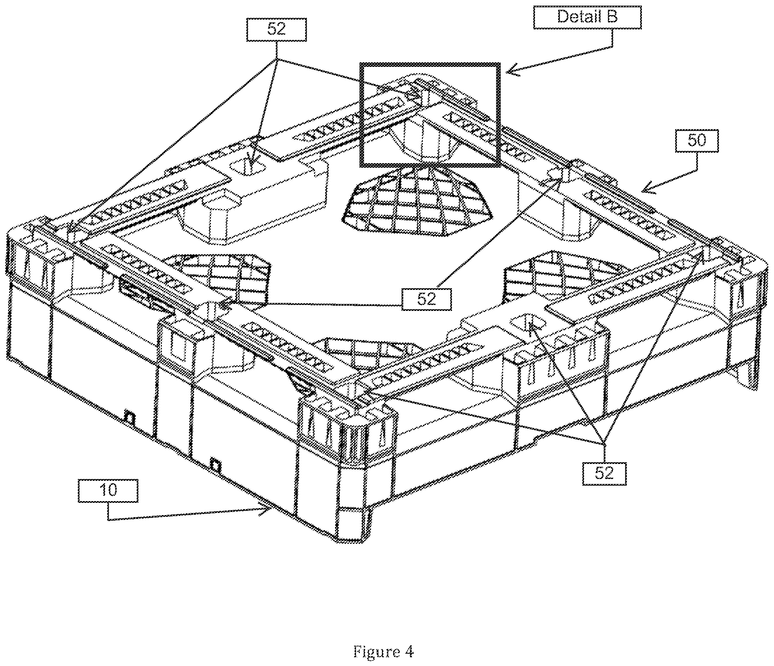

Figure 4 is bottom perspective view showing the embodiment of the forkstrap unit from Figure 1 installed on the embodiment of the base unit from Figure 1.

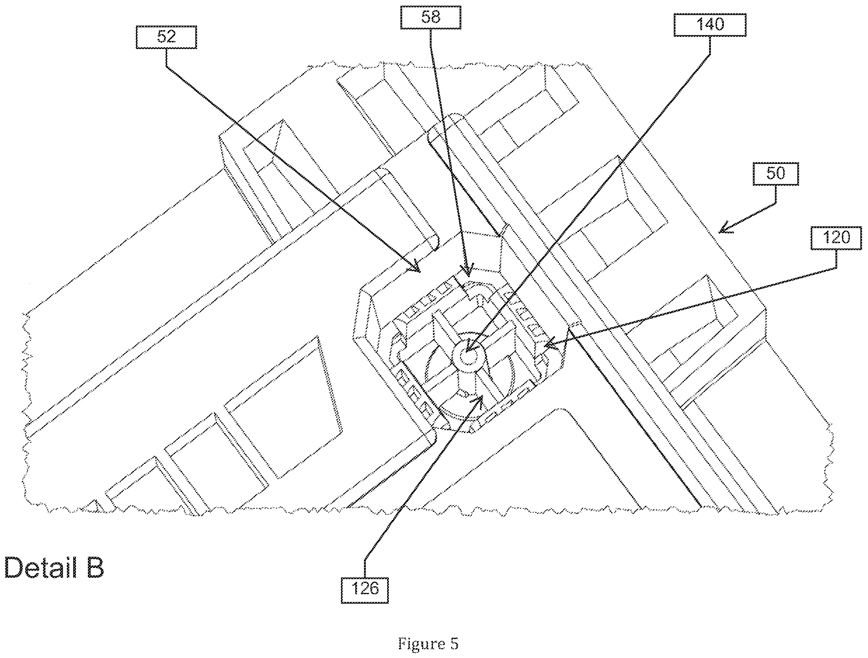

Figure 5 is a perspective view of Detail B showing the embodiment of the forkstrap connector from Figure 3 fully installed.

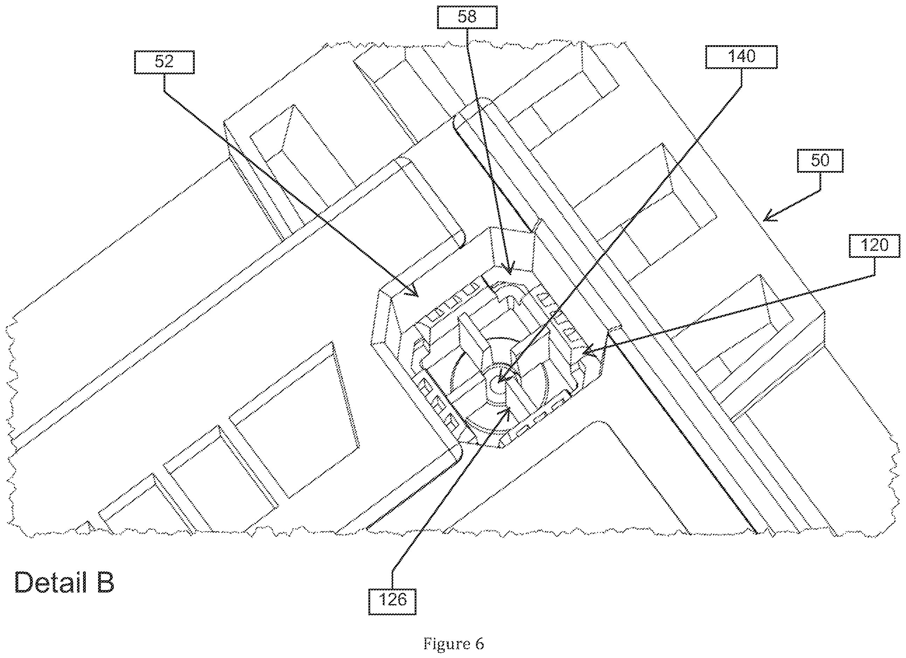

Figure 6 is a perspective view of Detail B showing the embodiment of the forkstrap connector from Figure 3 with the locking pin removed.

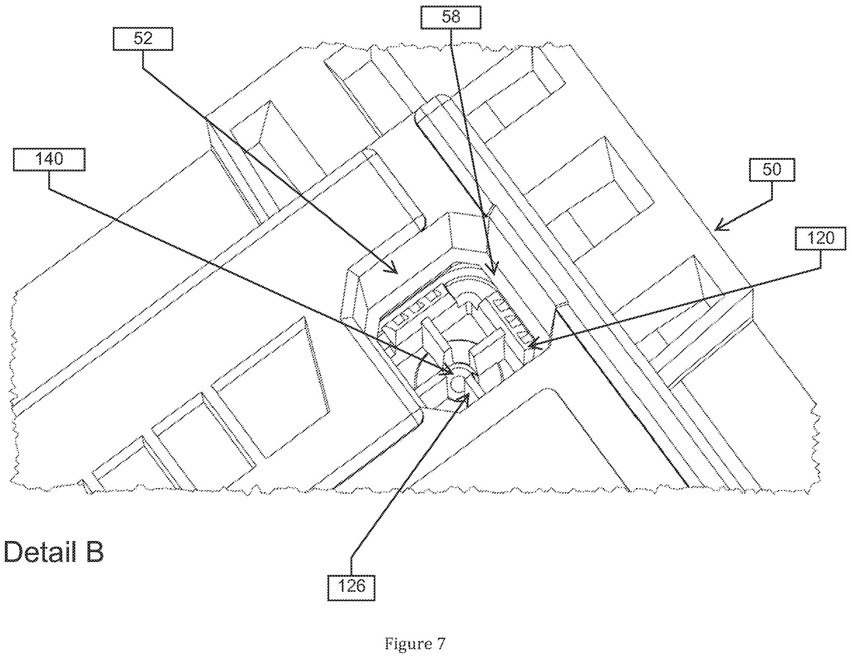

Figure 7 is a perspective view of Detail B showing the embodiment of the forkstrap connector from Figure 3 disengaged.

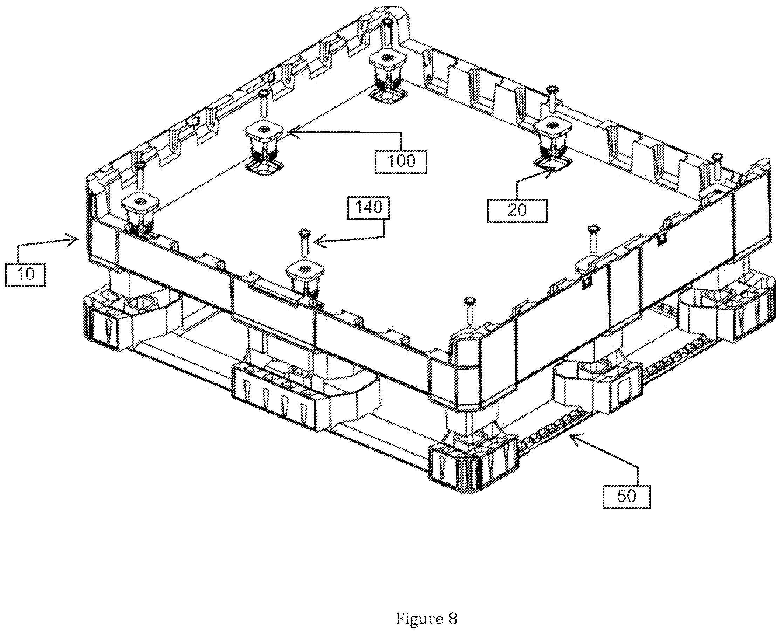

Figure 8 is an explode perspective view of the embodiment from Figure 1.
Figure 9 is an exploded perspective view of an embodiment of the forkstrap connector and locking pin.
Figure 10 is a partially exploded perspective view of an embodiment of the forkstrap connector and locking pin.

### DETAILED DESCRIPTION OF THE INVENTION

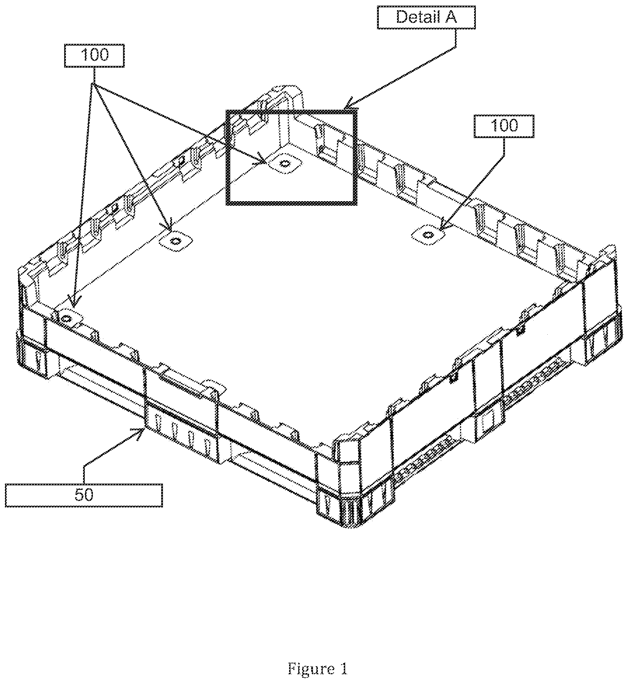

The present invention is a shipping container for bulk goods. Referring to Figure 1, container 1 comprises rectangular base unit 10, forkstrap unit 50, and connectors 100. It should be noted that for many applications container 1 would include a plurality of sidewalls. These sidewalls could take on a multitude of configurations ranging from sidewalls that can be folded for shipment or rigid sidewalls. The particular configurations of walls is, however, not relevant to the present invention that relates to how the forkstraps are interconnected to the base unit.

Base unit 10 further comprises a plurality of apertures 20. In the illustrated embodiment, each aperture 20 is defined by a vertical surface that terminates in rim 22; the upper surface ofrim 22 being below upper surface 12 of base unit 10 by a distance equal to the thickness of plate 110 of connector 100. Rim 22 is surrounded by channel 24 for receiving skirt 112 of connector 100.

Connector 100 comprises plate 110. Defined in the center of connector 100 is aperture 102 for receiving locking pin 140. Plate 110 is recessed as shown around aperture 102 in the illustration to allow head portion 142 of locking pin 140 to be flush with upper surface 12 of base unit 10 when locking pin 140 is fully inserted. Skirt 112 extends downward from the perimeter portion of plate 110.

Spaced apart from and inward of skirt 112, barbs 120 extend downward from the lower surface of plate 110. Each barb 120 terminates in outward-facing wedge-shaped portion 122. The upper portion of wedge-shaped portion 122 forms ledge 124. Each barb 120 may be joined to adj acent barbs 120 from the lower surface of plate 110 to an intermediate point to add rigidity as required for the particular application. Each barb 120 is additionally adapted to receive outward pressure from locking pin 140. In the illustrated embodiment, this adaptation comprises rib 126 that extends inward from barb 120.

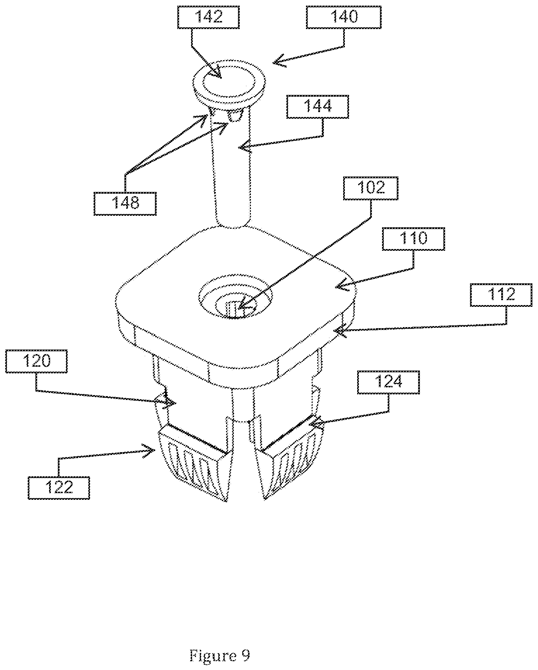

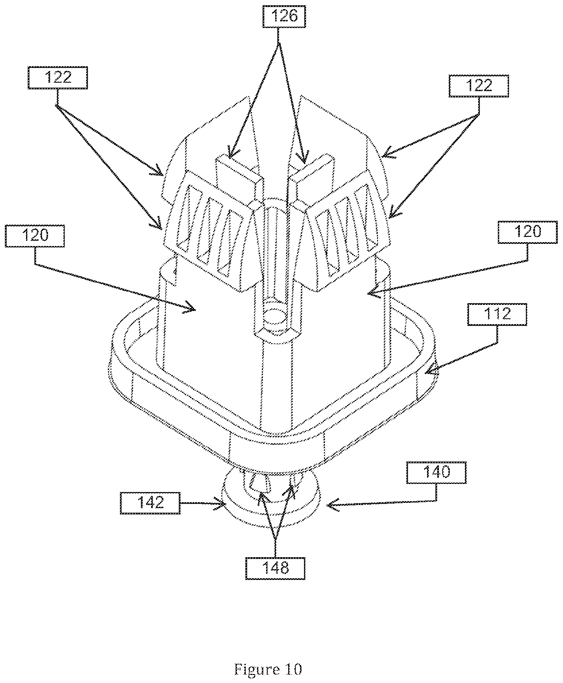

Locking pin 140 comprises head portion 142. Extending downward from head portion 142 is shaft 144; shaft 144 having a diameter sufficient to apply an outward pressure on ribs 126. Locking pin 140 further includes a retention mechanism to ensure that locking pin 140 remains in place once it is fully inserted. In the illustrated embodiment, this retention mechanism comprises a plurality of ramp-shaped retention protrusions 148 (best seen in Figures 9 and 10) extending outward from shaft 144. The upper surface of retention protrusions 148 are located such that when locking pin 140 is fully-inserted into forkstrap connector 100, the upper surface of retention protrusions 148 impinge on the lower surface of plate 110, preventing locking pin 140 from inadvertently being removed from forkstrap connector 100. In an alternate embodiment, locking pin 140 can terminate in an annular ring (not shown), the annular ring having a diameter slightly greater than shaft 144. Shaft 144 has a length sufficient to permit the upper surface of the annular ring to engage the lower surface of ribs 126 when locking pin 140 is fully inserted such that lower surface of head portion 142 is engaged with the upper surface of plate 110 (or the upper surface of the recessed area defined around aperture 102).

Forkstrap unit 50 includes receptacles 52 arising from the upper surface of the forkstrap unit, with receptacles 52 being located to align with latching apertures 20 defined in base unit 10. The upper portion of each receptacle 52 defines aperture 56. The inner surface of receptacle 52 surrounding aperture 56 forms latching surface 58. While the illustrated embodiment is drawn to an integrated forkstrap unit, the invention is equally applicable to containers using individual forkstraps. In such an application, each forkstrap would include a plurality of receptacles to align with a subset of apertures 20 in base unit 10.

When a connector 100 is inserted into an aperture 20 in base unit 10, barbs 120 extend through aperture 56 in receptacle 52 with the wedge-shaped portions 122 of barbs 120 facilitating installation (at the upper end portion of wedge-shaped portion 122 where the wedge is the widest, the barbs collectively are slightly further apart than the size of aperture 56 causing barbs 120 to be bent toward the center of aperture 56 as connector 100 is inserted). Once wedge-shaped portion 122 clears aperture 56 in receptacle 50, barbs 120 spring back, causing ledge 124 to impinge on latching surface, thereby joining forkstrap unit 50 to base unit 10. While the illustrated embodiment is drawn toward a configuration of four barbs, more or less barbs could be utilized (for example two opposing barbs) and the arrangement could be in a different pattern such as circular or triangular or some other shape (the shape of the apertures in the base unit and forkstrap unit would also be circular or triangular or other shape as the case may be).

To augment the strength of the connection and to preclude forkstrap unit 50 from becoming inadvertently disconnected from base unit 10, locking pin 140 is then inserted through aperture 106 in connector 100. Once full inserted, connector 100 is fixed in place with retention protrusions 148 impinging against the lower surface of plate 110 and the lower surface of head portion 142 impinging against the upper surface of plate 110 (or the upper surface of the recessed area defined around aperture 102). Locking pin 140 thereby precludes barbs 120 from being bent inward and allowing forkstrap unit 50 to disconnect from base unit 10 inadvertently.

If forkstrap unit 50 or connector 100 or both become damaged, replacement is facilitated by first removing locking pin 140. Forkstrap unit 50 can then be separated from base unit 10 without the use of undue force. Thus, the central, and most costly, portion of container 1, base unit 10 (and the sides), do not become scrap solely because forkstrap unit 50 or connector 100 is damaged. This is critical because forkstraps and connectors are the most commonly damaged portions of reusable shipping containers and the most common reason such containers have to be scrapped.

The foregoing described embodiments are exemplary in nature and are not intended to limit the scope of the invention.

## Claims

1. A shipping container (1) comprising:
a base unit (10), said base unit (10) defining a plurality of apertures (20);
a forkstrap unit (50) comprising a plurality of receptacles (52), said receptacles (52) being arranged such that each of said plurality of receptacles (52) aligns with one of the plurality of apertures (20) defined by the base unit (10);
a plurality of forkstrap connectors (100), each forkstrap connector (100) further comprising a plate (110), a locking aperture (102) defined in said plate (110), and a plurality of barbs (120) extending downward through said plate (110);
and a plurality of locking pins (140),
said forkstrap unit (50) being connected to said base unit (10) by inserting one of said plurality of forkstrap connectors (100) through each aperture (20) of said plurality of apertures (20) defined in said base unit (10) such that the plurality of barbs (120) associated with the forkstrap connector (100) extend into the corresponding receptacle (52) of said plurality of receptacles (52) in said forkstrap unit (50) and then inserting one of said plurality of locking pins (140) through the locking aperture (102) in the plate (110) of the forkstrap connector (100) such that the locking pin (140) abuts and applies outward pressure on each barb (120);
wherein each aperture (20) of said plurality of apertures (20) defined by said base unit (10) is surrounded by a rim (22) and the rim (22) is surrounded by a channel (24) and wherein the plate (110) of each of said plurality of forkstrap connectors (100) includes a skirt (112) extending downward from a perimeter portion of the plate (110), said skirt (112) being received by said channel (24) when the forkstrap connector (100) is inserted into said aperture (20);
wherein an upper surface of the rim (22) surrounding each aperture (20) of said plurality of apertures (20) defined by the base unit (10) is offset below the height of an upper surface (12) of the base unit (10) such that when one of the plurality of forkstrap connectors (100) is inserted into one of said plurality of apertures (20) defined by the base unit (10), an upper surface of the plate (110) of the forkstrap connector (100) aligns with the upper surface (12) of the base unit (10); and
wherein each of the plurality of forkstrap connectors (100) further comprises a recessed area defined around the locking aperture (102) in the plate (110) of the forkstrap connector (100), said recessed area being configured to receive a head portion (142) ofone of the plurality of locking pins (140) such that an upper surface of the head portion (142) of the locking pin (140) aligns with the upper surface of the plate (110) of the forkstrap connector (100).

2. The shipping container (1) of Claim 1 wherein each of the plurality of receptacles (52) in said forkstrap unit (50) further comprise a latching surface (58), said latching surface (58) being adjacent to the base unit (10) when the forkstrap unit (50) is connected to the base unit (10) and said latching surface (58) being located such that when the forkstrap unit (50) is connected to the base unit (10) the plurality of barbs (120) associated with each of the plurality of forkstrap connectors (100) impinge a bottom side of the latching surface (58).

3. The shipping container (1) of Claim 1 or 2 wherein the base unit (10) is a rectangular base unit (10).

4. The shipping container (1) of any preceding claim wherein
the locking pin (140) has a shaft portion (144), and at least one retention protrusion (148) extending outward from said shaft portion (144), such that when the locking pin (140) is fully inserted into the locking aperture (102) of the forkstrap connector (100), an upper surface of the head portion (142) is flush with an upper surface of the plate (110) of the forkstrap connector (100) and said at least one retention protrusion (148) impinges against a lower surface of said plate (110);
wherein said plurality of barbs (120) are configured to engage with an outer surface of the shaft portion (144) of the locking pin (140) when the locking pin (140) is fully inserted into the locking aperture (102).

## Patentansprüche

1. Versandcontainer (1), umfassend:
eine Basiseinheit (10), wobei die Basiseinheit (10) eine Mehrzahl von Öffnungen (20) definiert; eine Gabelgurteinheit (50), umfassend eine Mehrzahl von Aufnahmen (52), wobei die Aufnahmen (52) derart angeordnet sind, dass jede aus der Mehrzahl von Aufnahmen (52) an einer aus der Mehrzahl von der Basiseinheit (10) definierter Öffnungen (20) ausgerichtet ist;
eine Mehrzahl von Gabelgurtverbindungseinrichtungen (100), wobei jede Gabelgurtverbindungseinrichtung (100) ferner eine Platte (110), eine in der Platte (110) definierte Verriegelungsöffnung (102) und eine Mehrzahl sich durch die Platte (110) abwärts erstreckender Widerhaken (120); und eine Mehrzahl von Verriegelungsbolzen (140) umfasst,
wobei die Gabelgurteinheit (50) mit der Basiseinheit (10) durch Einsetzen einer aus der Mehrzahl von Gabelgurtverbindungseinrichtungen (100) durch jede Öffnung (20) der Mehrzahl von der Basiseinheit (10) definierter Öffnungen (20) auf eine Weise, dass sich die Mehrzahl von Widerhaken (120), die mit der Gabelgurtverbindungseinrichtung (100) verbunden sind, in die entsprechende Aufnahme (52) aus der Mehrzahl von Aufnahmen (52) in der Gabelgurteinheit (50) erstreckt, und anschließend Einsetzen eines von der Mehrzahl von Verriegelungsbolzen (140) durch die Verriegelungsöffnung (102) in der Platte (110) der Gabelgurtverbindungseinrichtung (100) derart verbunden wird, dass der Verriegelungsbolzen (140) an jeden Widerhaken (120) anstößt und nach außen gerichteten Druck darauf anlegt;
wobei jede Öffnung (20) der Mehrzahl von der Basiseinheit (10) definierter Öffnungen (20) von einem Rand (22) umgeben ist und der Rand (22) von einem Kanal (24) umgeben ist und wobei die Platte (110) jeder aus der Mehrzahl von Gabelgurtverbindungseinrichtungen (100) ein Unterteil (112) umfasst, das sich von einem Umfangsabschnitt der Platte (110) abwärts erstreckt, wobei das Unterteil (112) von dem Kanal (24) aufgenommen wird, wenn die Gabelgurtverbindungseinrichtung (100) in die Öffnung (20) eingesetzt wird;
wobei eine Oberfläche des Rands (22), der jede Öffnung (20) der Mehrzahl von der Basiseinheit (10) definierter Öffnungen (20) umgibt, derart unter die Höhe einer Oberfläche (12) der Basiseinheit (10) abgesetzt wird, dass sich, wenn eine aus der Mehrzahl von Gabelgurtverbindungseinrichtungen (100) in eine aus der Mehrzahl von der Basiseinheit (10) definierter Öffnungen (20), eingesetzt wird, eine Oberfläche der Platte (110) der Gabelgurtverbindungseinrichtung (100) an der Oberfläche (12) der Basiseinheit (10) ausrichtet; und
wobei jede aus der Mehrzahl von Gabelgurtverbindungseinrichtungen (100) ferner einen vertieften Bereich umfasst, der um die Verriegelungsöffnung (102) in der Platte (110) der Gabelgurtverbindungseinrichtung (100) definiert ist, wobei der vertiefte Bereich derart konfiguriert ist, dass er einen Kopfabschnitt (142) eines aus der Mehrzahl von Verriegelungsbolzen (140) derart aufnimmt, dass sich eine Oberfläche des Kopfabschnitts (142) des Verriegelungsbolzens (140) an der Oberfläche der Platte (110) der Gabelgurtverbindungseinrichtung (100) ausrichtet.

2. Versandcontainer (1) nach Anspruch 1, wobei jedes aus der Mehrzahl von Aufnahmen (52) in der Gabelgurteinheit (50) ferner eine Rastfläche (58) aufweist, wobei die Rastfläche (58) an die Basiseinheit (10) angrenzt, wenn die Gabelgurteinheit (50) mit der Basiseinheit (10) verbunden ist, und wobei die Rastfläche (58) derart angeordnet ist, dass, wenn die Gabelgurteinheit (50) mit der Basiseinheit (10) verbunden ist, die Mehrzahl von Widerhaken (120), die mit jeder aus der Mehrzahl von Gabelgurtverbindungseinrichtungen (100) verbunden sind, an eine Bodenseite der Rastfläche (58) stößt.

3. Versandcontainer (1) nach Anspruch 1 oder 2, wobei die Basiseinheit (10) eine rechteckige Basiseinheit (10) ist.

4. Versandcontainer (1) nach einem der vorstehenden Ansprüche, wobei
der Verriegelungsbolzen (140) einen Schaftabschnitt (144) aufweist und sich mindestens eine Rückholausbuchtung (148) von dem Schaftabschnitt (144) derart nach außen erstreckt, dass, wenn der Verriegelungsbolzen (140) vollständig in die Verriegelungsöffnung (102) der Gabelgurtverbindungseinrichtung (100) eingesetzt ist, eine Oberfläche des Kopfabschnitts (142) bündig mit einer Oberfläche der Platte (110) der Gabelgurtverbindungseinrichtung (100) ist und an mindestens einer Rückholausbuchtung (148) gegen eine untere Fläche der Platte (110) stößt;
wobei die Mehrzahl von Widerhaken (120) derart konfiguriert ist, dass sie eine Außenfläche des Schaftabschnitts (144) des Verriegelungsbolzen (140) in Eingriff nehmen, wenn der Verriegelungsbolzen (140) vollständig in die Verriegelungsöffnung (102) eingesetzt wird.

## Revendications

1. Conteneur de transport (1) comprenant :
une embase (10), ladite embase (10) définissant une pluralité d'ouvertures (20) ;
une semelle (50) comprenant une pluralité de réceptacles (52), lesdits réceptacles (52) étant agencés de sorte que ladite pluralité de réceptacles (52) s'aligne avec une de la pluralité d'ouvertures (20) définies par l'embase (10) ;
une pluralité de connecteurs de semelle (100), chaque connecteur de semelle (100) comprenant en outre une plaque (110), une ouverture de verrouillage (102) définie dans ladite plaque (110), et une pluralité d'ardillons (120) s'étendant vers le bas à travers ladite plaque (110) ;
et une pluralité de goupilles de verrouillage (140),
ladite semelle (50) étant raccordée à ladite embase (10) par l'insertion d'un desdits connecteurs de semelle (100) dans chaque ouverture (20) de ladite pluralité d'ouvertures (20) définies dans ladite embase (10), de sorte que la pluralité d'ardillons (120) associée avec le connecteur de semelle (100) se déploie dans le réceptacle (52) correspondant de ladite pluralité de réceptacles (52) dans ladite semelle (50), puis par l'insertion de ladite pluralité de goupilles de verrouillage (140) dans l'ouverture de verrouillage (102) dans la plaque (110) du connecteur de semelle (100), de sorte que la goupille de verrouillage (140) vienne buter, et exercer une pression vers l'extérieur, sur chaque ardillon (120) ;
chaque ouverture (20) de ladite pluralité d'ouvertures (20) définies par ladite embase (10) étant entourée par un rebord (22), le rebord (22) étant entouré par un canal (24), et la plaque (110) de chacun de la pluralité de connecteurs de semelle (100) comprenant une jupe (112) s'étendant vers le bas depuis un pourtour de la plaque (110), ladite jupe (112) s'introduisant dans ledit canal (24) lors de l'insertion du connecteur de semelle (100) dans ladite ouverture (20) ;
une surface supérieure du rebord (22) entourant chaque ouverture (20) de ladite pluralité d'ouvertures (20) définie par l'embase (10) étant décalée sous la hauteur d'une surface supérieure (12) de l'embase (10) de sorte que lorsqu'une de la pluralité de connecteurs de semelle (100) s'introduit dans une de ladite pluralité d'ouvertures (20) définie par l'embase (10), une surface supérieure de la plaque (110) du connecteur de semelle (100) s'aligne avec la surface supérieure (12) de l'embase (10) ; et
chacun de la pluralité de connecteurs de semelle (100) comprenant en outre une zone évidée autour de l'ouverture de verrouillage (102) dans la plaque (110) du connecteur de semelle (100), ladite zone évidée étant configurée pour recevoir une partie de tête (142) d'une de la pluralité de goupilles de verrouillage (140), de sorte qu'une surface supérieure de la partie de tête (142) de la goupille de verrouillage (140) s'aligne avec la surface supérieure de la plaque (110) du connecteur de semelle (100).

2. Conteneur de transport (1) selon la revendication 1, chacun de la pluralité de réceptacles (52) dans ladite semelle (50) comprenant en outre une surface de verrouillage (58), ladite surface de verrouillage (58) étant adjacente à l'embase (10) lorsque la semelle (50) est raccordée à l'embase (10), et ladite surface de verrouillage (58) étant positionnée de sorte que lorsque la semelle (50) est raccordée à l'embase (10), la pluralité d'ardillons (120) associée avec chacun de la pluralité de connecteurs de semelle (100) empiète sur un côté inférieur de la surface de verrouillage (58).

3. Conteneur de transport (1) selon la revendication 1 ou 2, l'embase (10) étant une embase (10) à base rectangulaire.

4. Conteneur de transport (1) selon une quelconque des revendications précédentes, dans lequel
la goupille de verrouillage (140) possède une partie de tige (144) et au moins une saillie de retenue (148) déployée vers l'extérieur depuis ladite partie de tige (144), de sorte que lorsque la goupille de verrouillage (140) est introduite à fond dans l'ouverture de verrouillage (102) du connecteur de semelle (100), une surface supérieure de la partie de tête (142) soit au ras d'une surface supérieure de la plaque (110) du connecteur de semelle (100), et ladite au moins une saillie de retenue (148) empiète contre une surface inférieure de ladite plaque (110) ;
ladite pluralité d'ardillons (120) étant configurée pour s'engager dans une surface extérieure de la partie de tige (144) de la goupille de verrouillage (140) lorsque la goupille de verrouillage (140) est introduite à fond dans l'ouverture de verrouillage (102).
